# EUROPEAN PATENT SPECIFICATION

(11) **EP 1 106 829 B1**
(45) Date of publication and mention of the grant of the patent: **26.09.2012**
(21) Application number: 00122366.8
(22) Date of filing: 25.10.2000
(51) Int. Cl.: F04B 27/18, F16K 31/06

(54) **Control valve for variable capacity compressors**
Regelventil für Kompressoren variabler Verdrängung
Soupape de régulation pour compresseurs à capacité variable

(30) Priority: 30.11.1999 JP 33982699
(43) Date of publication of application: 13.06.2001
(73) Proprietor: Fujikoki Corporation, Tokyo 158-0082 (JP)
(72) Inventor: Kume, Yoshiyuki, Setagaya-ku, Tokyo 158-0082 (JP); Imai, Masayuki, Setagaya-ku, Tokyo 158-0082 (JP)
(74) Representative: Gleiss, Alf-Olav

(56) References cited:
- EP-A- 0 498 552
- EP-A- 0 864 749
- EP-A- 0 894 651
- US-A- 5 332 365

## Description

### BACKGROUND OF THE INVENTION

The present invention relates to a control valve for a variable capacity compressor, which is adapted for use in controlling the capacity of variable capacity compressor to be employed in air conditioners for vehicles, etc., and in particular to an electromagnetic controlling means-attached control valve for a variable capacity compressor, which is provided with a pressure sensitive bellows and a solenoid magnetizing means.

As a variable capacity compressor to be employed in air conditioners for vehicles, etc., there is known a wobble plate type variable capacity compressor which is designed to change the discharge capacity thereof by making the inclination angle of the wobble plate variable, thereby controlling the pressure of crankcase of the wobble plate type variable capacity compressor. Namely, this control valve for a variable capacity compressor functions as a flow rate controlling valve for controlling the pressure of crankcase by introducing a discharge pressure into the crankcase of the wobble plate type variable capacity compressor. An example of a control valve for a variable capacity compressor is shown in document US-A-5 332 365 which is considered to be the closest prior art.

As one further example of a control valve for a variable capacity compressor, there is known, as shown in Japanese Patent Unexamined Publication (Kokai) H9-268974 (US-A-5 964 578), an electromagnetic controlling means-attached control valve for a variable capacity compressor, which comprises a valve housing having a valve port formed between an inlet port and an outlet port, a valve element disposed inside the valve housing for controlling the flow rate through the adjustment of opening degree of the valve port, a pressure sensitive bellows for actuating the opening or closing of the valve element, and a solenoid magnetization means.

This electromagnetic controlling means-attached control valve for a variable capacity compressor is basically designed such that through a detection of an inlet pressure of the compressor, the pressure sensitive bellows is extended or contracted to actuate the valve element so as to adjust the opening degree of the valve port, thereby controlling the pressure of crankcase in accordance with the magnitude of inlet pressure. Therefore, when a cooling load is relatively large, the valve element is caused to deviate in the direction to close the valve through the magnetization of the solenoid magnetizing means, thereby decreasing the opening degree of the valve port and hence, making the pressure of crankcase close to the inlet pressure, thus controlling the variable capacity compressor to increase the discharge capacity thereof.

Although the aforementioned electromagnetic controlling means-attached control valve for a variable capacity compressor is capable of achieving objects expected, the pressure sensitive bellows and solenoid magnetization means thereof are arranged in a row along the direction of opening or closing the valve element, thus raising a problem that the size of the compressor becomes bulky, i.e. it is difficult to make the compressor compact in configuration. The miniaturization of the control valve for a variable capacity compressor is very important requisite as it is mounted on a vehicle.

Further, the conventional electromagnetic controlling means-attached control valve for a variable capacity compressor is constructed such that a solenoid assembly (electromagnetic coil portion) constituting an electric component of the solenoid magnetization means is mounted on the valve housing by means of caulking, i.e. the solenoid assembly is not enabled to be reattached afterward to the valve housing. Therefore, the conventional electromagnetic controlling means-attached control valve is poor in operability in assembling the solenoid assembly, i.e. it is impossible to easily perform the exchange of the solenoid assembly as demanded for meeting the property of the control valve, or for the purpose of maintenance.

### BRIEF SUMMARY OF THE INVENTION

The present invention has been made under the circumstances mentioned above, and therefore an object of the present invention is to provide an electromagnetic controlling means-attached control valve for a variable capacity compressor, which is suited for miniaturizing the valve, for enabling the solenoid assembly to be reattached afterward to the valve housing, and for the attachment or exchange of the solenoid assembly.

With a view to achieve the aforementioned object, the present invention according to claim 1 provides a control valve for a variable capacity compressor, which comprises a valve housing having a valve port formed between an inlet port and an outlet port, a valve element disposed inside the valve housing for controlling a flow rate through by an adjustment of an opening degree of the valve port, a pressure sensitive bellows for actuating the opening or closing of the valve element, and a solenoid magnetization means; wherein the solenoid magnetization means comprises a solenoid assembly, a fixed suction member, a plunger which is adapted to be moved in a way to contact the fixed suction member by the magnetization of solenoid assembly, and a plunger spring which is adapted to urge the plunger to move in a direction away from the fixed suction member; that the plunger is provided therein with an inner cylindrical portion housing therein the pressure sensitive bellows and said plunger is adapted to be connected at a distal end portion thereof with the valve element, the pressure sensitive bellows being housed inside the inner cylindrical portion; and that the pressure sensitive bellows is adapted to be fixedly connected through one end member thereof with the distal end portion of the plunger and through another end member thereof with the fixed suction member.

According to a preferable embodiment of the control valve for a variable capacity compressor of the present invention, the control valve further comprises an adjuster plug screwed to the fixed suction member, and said other end member of the pressure sensitive bellows is connected via a connecting rod with the adjuster plug, thereby enabling to adjust the initial state of the pressure sensitive bellows by means of the adjuster plug.

According to another preferable embodiment of the control valve for a variable capacity compressor of the present invention, a valve-closing spring for urging the valve element in the direction to close the valve element is interposed between the valve element and an adjusting spring retainer screwed to the valve housing thereby enabling to adjust the set load of the valve-closing spring by means of the adjusting spring retainer, or a valve-closing spring for urging the valve element in the direction to close the valve element is interposed between the valve element and a press-fitted spring retainer press-fittingly fixed to the valve housing, the fixed position thereof being made adjustable, thereby enabling to adjust the set load of the valve-closing spring by means of the press-fitted spring retainer.

According to a further preferable embodiment of the control valve for a variable capacity compressor of the present invention, the valve element is constituted by a spool valve or a ball valve.

According to a further preferable embodiment of the control valve for a variable capacity compressor of the present invention, it is featured in that it further comprises a plunger tube fixedly attached to the solenoid-mounting portion of the valve housing and housing therein the plunger which is made slidable in the axial direction thereof, that the fixed suction member is coaxially fixed to the distal end of the plunger tube, and that the cylindrical solenoid assembly is removably mounted on the outer wall of the plunger tube and of the fixed suction member.

According to the control valve for a variable capacity compressor of the present invention which is constructed as mentioned above, the pressure sensitive bellows is housed in an inner cylindrical portion of the plunger, i.e. the pressure sensitive bellows is housed inside the plunger, thereby making it possible to miniaturize the control valve.

Further, according to the control valve for a variable capacity compressor of the present invention, the initial state of the pressure sensitive bellows is made adjustable by means of the adjuster plug, and the set load of the valve-closing spring is made adjustable by means of the adjusting spring retainer or by means of the press-fitted spring retainer.

Moreover, according to the control valve for a variable capacity compressor of the present invention, since the cylindrical solenoid assembly is removably mounted on the outer wall of the plunger tube and of the fixed suction member, the solenoid assembly can be reattached afterward to the valve housing, thereby making it possible to easily perform the attachment or exchange of the solenoid assembly.

### BRIEF DESCRIPTION OF THE SEVERAL VIEWS OF THE DRAWING

FIG. 1 is a longitudinal sectional view of a control valve for a variable capacity compressor according to a first embodiment of the present invention;
FIG. 2 is a longitudinal sectional view of a control valve for a variable capacity compressor according to a second embodiment of the present invention;
Fig. 3 is a longitudinal sectional view of a control valve for a variable capacity compressor according to a third embodiment of the present invention;
Fig. 4 is a longitudinal sectional view of a control valve for a variable capacity compressor according to a fourth embodiment of the present invention; and
Fig. 5 is a longitudinal sectional view of a control valve for a variable capacity compressor according to a fifth embodiment of the present invention.

### DETAILED DESCRIPTION OF THE INVENTION

Various embodiments of a control valve for a variable capacity compressor according to the present invention will be explained with reference to the drawings.

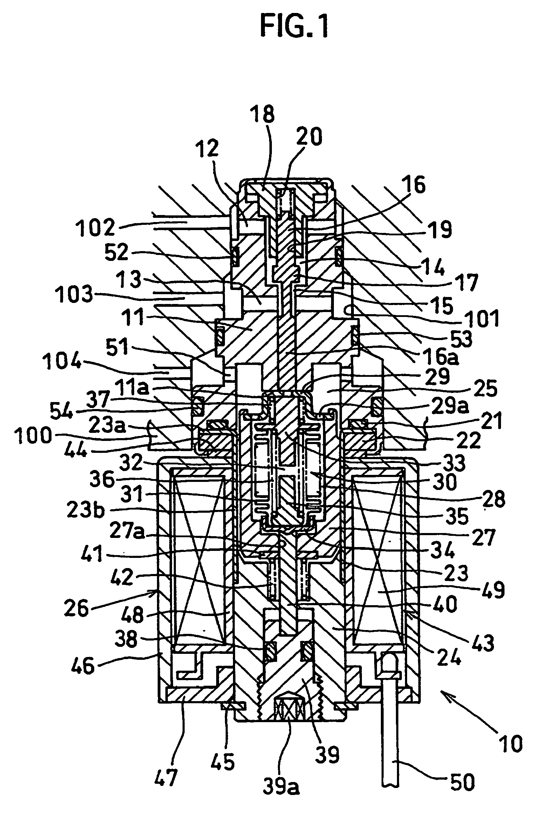

FIG. 1 shows a longitudinal sectional view of a control valve for a variable capacity compressor according to a first embodiment of the present invention. In FIG. 1, the control valve for a variable capacity compressor is Integrally identified by a reference numeral 10. The control valve 10 comprises a valve housing 11 which is constituted by an inlet port 12, an outlet port 13, a valve chamber 14 formed between the inlet port 12 and the outlet port 13, and a valve port 15.

Inside this valve chamber 14, there is disposed a spool valve 16 which is made movable in the elevational direction as viewed in FIG. 1 (in the axial direction of the valve). This spool valve 16 is provided with a large diametrical valve land portion 17, which is enabled to move close to or away from the valve port 15, thereby quantitatively increasing or decreasing the opening degree of the valve port 15.

A valve guide member 18 is fixed to one end (the upper end) of the valve housing by means of caulking and provided with a guide hole 19 for guiding the movement in the axial direction of the spool valve 16. A valve-closing spring 20 for urging the spool valve 16 to move downward as viewed in FIG. 1 (i.e. in the valve-closing direction) is interposed between the bottom of the guide hole 19 and the upper end of the spool valve 16.

A mounting flange 23a formed at one end of the plunger tube 23 Is fixed via an O-ring 21 and a spacer 22 to the other end (the lower portion) of the valve housing 11 by means of caulking so as to enable the cylindrical plunger tube 23 to be fixed coaxial with the spool valve 16 to the valve housing 11. To the distal end (the other end) of plunger tube 23 is fixed coaxially a fixed suction member 24 of the solenoid magnetization means 26 by means of welding, for instance. This fixed suction member 24 is constituted by a circular cross-sectional member having the same outer diameter as the outer diameter of the plunger tube 23, and the outer wall surface of the fixed suction member 24 is made coaxial and flush with the outer wall surface of the plunger tube 23.

A plunger housing/pressure sensitive chamber 25 of closed structure is formed on the other side of the valve housing 11, the chamber 25 being defined by the members including the other end of the valve housing 11, the cylindrical portion 23b of the plunger tube 23 and the fixed suction member 24.

Inside this plunger housing/pressure sensitive chamber 25, there is disposed a plunger 27 of the solenoid magnetization means 26 which is made movable in the elevational direction as viewed in FIG. 1 (in the axial direction of the valve). This plunger 27 is engaged slidably with the cylindrical portion 23b of the plunger tube 23. In other words, the plunger 27 is housed inside the cylindrical portion 23b of the plunger tube 23 with the plunger 27 being made slidable in the axial direction thereof.

This plunger 27 is formed into a cup-like configuration forming therein an inner cylindrical portion 28 for housing the pressure sensitive bellows (a pressure sensitive bellows housing inner cylinder), and contacted via an end member 29 fixed to the distal end (the upper end) thereof with the stem portion 16a of the spool valve 16. This spool valve 16 is always urged by the resilient force of a valve-closing spring 20, so that the distal end of the stem portion 16a is always pressed onto the end member 29. Therefore, in response to the descending movement of the plunger 27 and the end member 29, the spool valve 16 is caused to move due to the resilient force of the valve-closing spring 20 in the direction to close the valve. On the other hand, when the plunger 27 and the end member 29 are moved upward, the spool valve 16 is caused to move against the resilient force of the valve-closing spring 20 in the direction to open the valve. By the way, as shown in FIG. 1, a state where the end member 29 is contacted with the end face 11 a of the valve housing 11 is the maximum open state of valve.

A pressure sensitive bellows 30 is disposed inside the pressure sensitive bellows housing inner cylinder 28. This pressure sensitive bellows 30 is constituted by a metallic main body 31, a pair of end members 33 (a distal end of the plunger 27) and 34 (an end of the fixed suction member 24) functioning also as a stopper and fixed respectively to both ends of the main body 31 so as to define a vacuum chamber 32 within the main body, a stopper member 35 fixed to the end member 34, and an inner spring 36 interposed between the end members 33 and 34. This pressure sensitive bellows 30 is designed to be expanded or contracted in the axial direction of the spool valve 16 in response to an external pressure, i.e. a difference in pressure between the pressure of the pressure sensitive bellows housing inner cylinder 28 and the pressure inside the vacuum chamber 32.

The end member 33 constituting one of the end members of the pressure sensitive bellows 30 is engaged with the end member 29 of the plunger 27, and a compression coil spring 37 is interposed between these end members 33 and 29. The fixed suction member 24 is screw-engaged via an 0-ring 38 with an adjust plug 39 so as to ensure an air-tight condition, the adjust plug 39 being fixedly connected with one end of a linking rod 40. this linking rod 40 is disposed to protrude through a through-hole 27a of the plunger 27 into the pressure sensitive bellows housing inner cylinder 28, the protruded end thereof being engaged with the end member 34 constituting the other one of the pressure sensitive bellows 30. In other words, this end member 34 of the pressure sensitive bellows 30 is connected through the linking rod 40 with the adjust plug 39.

This adjust plug 39 is provided with a hexagon wrench hole 39a, thereby enabling this adjust plug 39 to be adjusted of its engaging position relative to the fixed suction member 24 of the adjust plug 39 by making use of a hexagon wrench. Through the adjustment of the engaging position of this adjust plug 39 relative to the fixed suction member 24, the initial state of the pressure sensitive bellows 30 can be adjusted.

Further, the valve housing 11 is also provided with a working fluid pressure port 51 for introducing a working fluid pressure into the plunger housing/pressure sensitive chamber 25, while the end member 29 is provided with a through-hole 29a for introducing a working fluid pressure into the pressure sensitive bellows housing inner cylinder 28.

Between a seat plate 41 attached to the plunger 27 and the fixed suction member 24, there is interposed a plunger spring 42 for urging the plunger 27 to move away from the fixed suction member 24.

On the outer wall of the plunger tube 23 and of the fixed suction member 24, there is mounted a cylindrical solenoid assembly 43 of the solenoid magnetization means 26 in such a manner that the cylindrical solenoid assembly 43 is removably engaged with the outer wall of the plunger tube 23 and of the fixed suction member 24 and fixed in place by means of a spacer 44 and a C-ring 45, the spacer 44 being inserted into a space between the top surface of the cylindrical solenoid assembly 43 and the valve housing 11.

This cylindrical solenoid assembly 43 is constituted by a cup-shaped solenoid case 46, a ring-shaped end cover 47 fixed to the open end of the solenoid case 46, a coil bobbin 48 arranged inside the solenoid case 46, a winding 49 wound around the coil bobbin 48, and a wiring 50. This cylindrical solenoid assembly 43 is designed to be magnetized as an electric current is passed to the winding 49, thereby enabling the plunger 27 to be moved to contacted with or approach to the fixed suction member 24 against the resilient force of the plunger spring 42.

As shown in FIG. 1, the control valve 10 for a variable capacity compressor is constructed such that the valve housing 11 is fitted in a valve mounting hole 101 formed in the case 100 of the variable capacity compressor, and that a plurality of Orings 52, 53 and 54 are mounted so as to air-tightly separate each of the ports 12, 13 and 51 of the valve housing 11, respectively. As the control valve 10 is attached to the case 100, the inlet port 12 is allowed to communicate with a discharge pressure passageway 102, the outlet port 13 is allowed to communicate with a crankcase passageway 103, and the working fluid pressure port 51 is allowed to communicated with an inlet pressure passageway 104. By the way, the solenoid assembly 43 is exposed out of the valve mounting hole 101 for the purpose of heat radiation.

Next, the operation of the control valve 10 for a variable capacity compressor, which is constructed as described above will be explained.

By way of the inlet pressure passageway 104, the inlet pressure of the variable capacity compressor is given to the working fluid pressure port 51, so that when the inlet pressure acting on the pressure sensitive bellows 30 disposed inside the pressure sensitive bellows housing inner cylinder 28 is raised, the pressure sensitive bellows 30 is caused to contract. As a result, the end member 29 and the plunger 27 are caused to move closer to the fixed suction member 24 against the resilient force of the plunger spring 42, and due to the movement of these end member 29 and plunger 27, the spool valve 16 is caused to move in the direction to close the valve due to the resilient force of the valve-closing spring 20, thereby reducing the opening degree of the valve port 15. As a result, the flow rate of the discharging fluid of the variable capacity compressor that can be introduced into the crankcase is decreased, thereby lowering the pressure of the crankcase and hence, increasing the discharge capacity of the variable capacity compressor.

Whereas, when the inlet pressure acting on the pressure sensitive bellows 30 disposed inside the pressure sensitive bellows housing inner cylinder 28 is lowered, the pressure sensitive bellows 30 is caused to expand. As a result, the end member 29 and the plunger 27 are caused to move away from the fixed suction member 24 due to the resilient force of the plunger spring 42, and due to the movement of these end member 29 and plunger 27, the spool valve 16 is caused to pushingly move in the direction to open the valve against the resilient force of the valve-closing spring 20, thereby enlarging the opening degree of the valve port 15. As a result, the flow rate of the discharging fluid of the variable capacity compressor that can be introduced into the crankcase is increased, thereby raising the pressure of the crankcase and hence, decreasing the discharge capacity of the variable capacity compressor.

When an electric current is passed to the winding 49 of the solenoid assembly 43, the winding 49 is magnetized, thereby enabling the plunger 27 and the end member 29 to be moved to contacted with or approach to the fixed suction member 24 against the resilient force of the plunger spring 42.

As a result, the spool valve 16 is caused to move in the direction to close the valve due to the resilient force of the valve-closing spring 20, thereby reducing the opening degree of the valve port 15. As a result, the flow rate of the discharging fluid of the variable capacity compressor that can be introduced into the crankcase is decreased, thereby lowering the pressure of the crankcase and hence, increasing the discharge capacity of the variable capacity compressor.

When an electric current to the winding 49 of the solenoid assembly 43 is stopped, the winding 49 is demagnetized, thereby enabling the plunger 27 and the end member 29 to be moved back to the initial positions thereof due to the resilient force of the plunger spring 42. As a result, the spool valve 16 is caused to move in the direction to open the valve, thereby enlarging the opening degree of the valve port 15. As a result, the flow rate of the discharging fluid to be introduced into the crankcase of the variable capacity compressor is increased, thereby raising the pressure of the crankcase and hence, decreasing the discharge capacity of the variable capacity compressor.

As explained above, according to the control valve 10 for a variable capacity compressor of this embodiment, since the pressure sensitive bellows 30 is housed in the pressure sensitive bellows housing inner cylinder 28 which is formed in the plunger 27, it is possible to minimize the dimension in the axial direction of the control valve and hence, to miniaturize the control valve. Further, the initial state of the pressure sensitive bellows 30 can be made adjustable by means of the adjuster plug 39, thereby enabling the controlling characteristics of the control valve 10 to be adjusted.

Furthermore, since the cylindrical solenoid assembly 43 is removably mounted on the outer wall of the plunger tube 23 and of the fixed suction member 24, the solenoid assembly 43 can be reattached afterward to the valve housing 11, thereby making it possible to easily perform the attachment or exchange of the solenoid assembly 43.

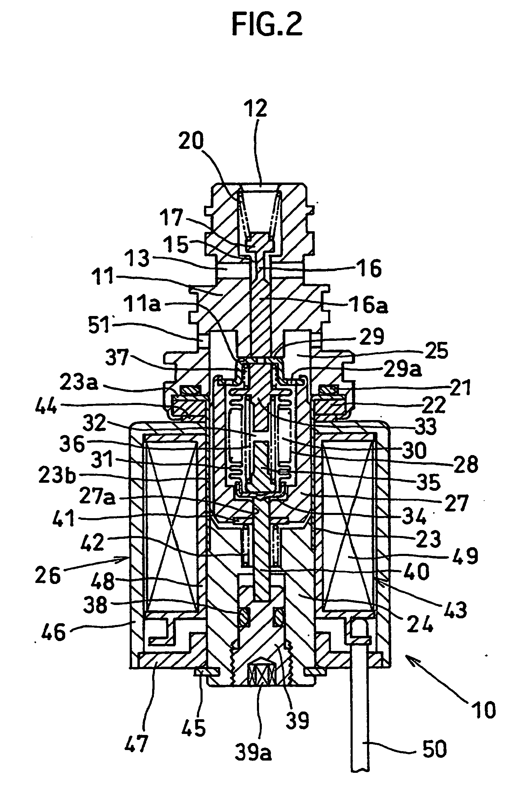

FIGS. 2, 3, 4 and 5 respectively illustrates a control valve for a variable capacity compressor according to a second, third, fourth and fifth embodiment of the present invention. By the way, the portions or members in FIGS. 2, 3, 4 and 5 which correspond to those shown in FIG. 1 will be represented by the same numerals thereby omitting the explanation thereof.

In the control valve 10 for a variable capacity compressor according to the second embodiment which is shown in FIG. 2, a cone-shaped compression coil spring is substituted for the cylindrical compression coil spring as a valve-closing spring 20, and this valve-closing spring 20 is attached to a portion between the spool valve 16 and the valve housing 11.

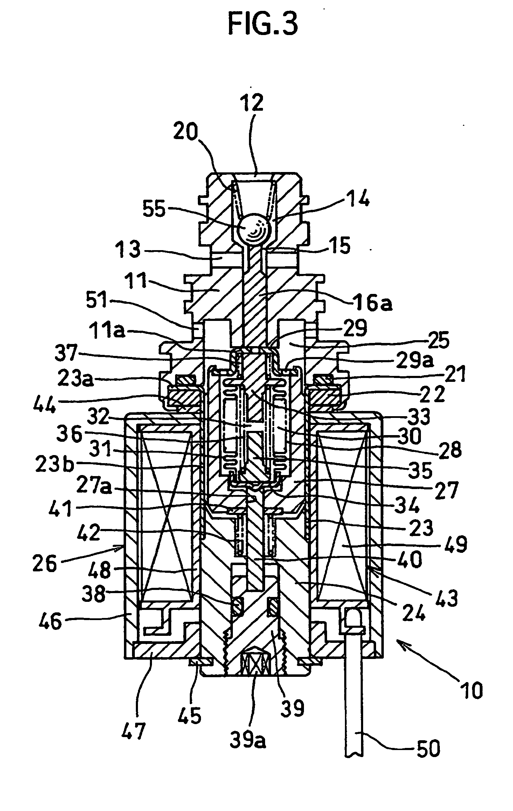

In the control valve 10 for a variable capacity compressor according to the third embodiment which is shown in FIG. 3, a ball valve 55 is employed as a valve element for performing the adjustment of opening degree of the valve port 15, and the stem portion 16a is connected with the ball valve 55.

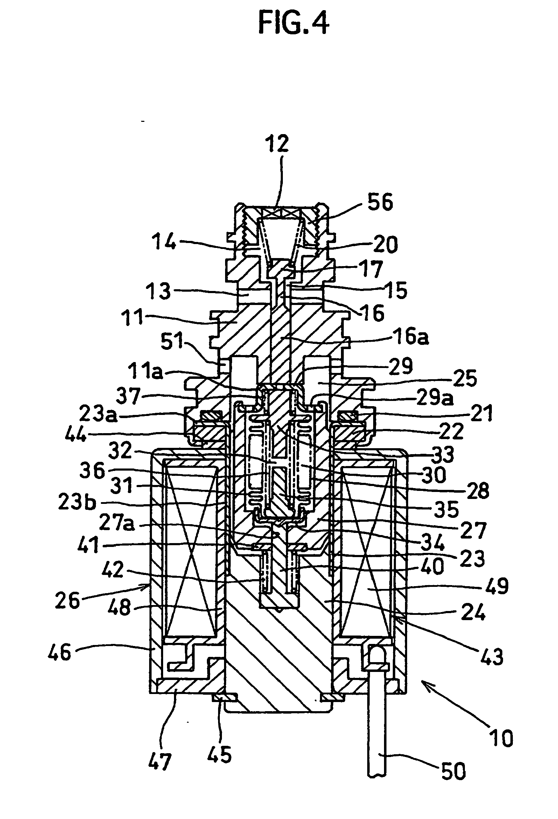

In the control valve 10 for a variable capacity compressor according to the fourth embodiment which is shown in FIG. 4, an adjust spring retainer 56 is screw-engaged with an upper portion of the valve housing 11, and the valve-closing spring 20 is attached to a portion between the adjust spring retainer 56 and the spool valve 16. Further, the adjust spring retainer 56 is provided with an inlet port 12 functioning as a hexagon wrench hole and formed passing through the adjust spring retainer 56.

According to this embodiment, by adjusting the screw engagement position of the adjust spring retainer 56 relative to the valve housing 11, the spring load to be set of the valve-closing spring 20 can be adjusted, thereby making it possible to adjust the controlling characteristics of the control valve 10 for a variable capacity compressor.

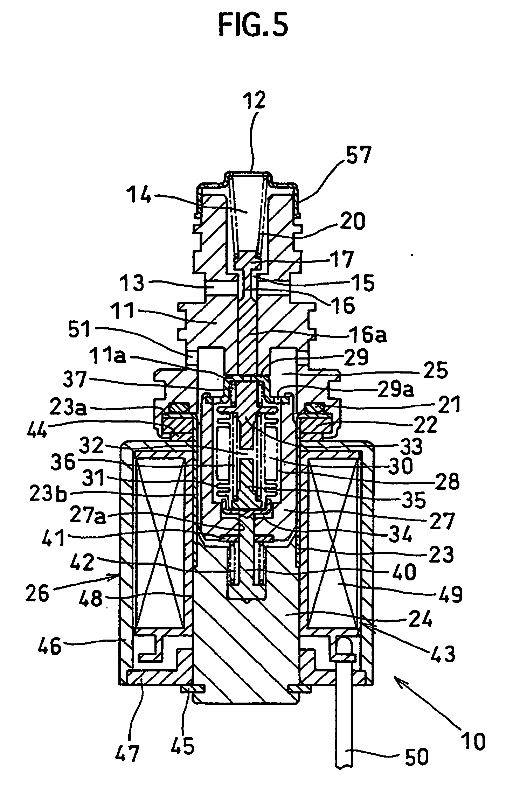

In the control valve 10 for a variable capacity compressor according to the fifth embodiment which is shown in FIG. 5, a press-fitted spring retainer 57 is press-fittingly fixed to the valve housing 11, the fixed position thereof being made adjustable, and the valve-closing spring 20 is attached to a portion between the press-fitted spring retainer 57 and the spool valve 16. Further, the press-fitted spring retainer 57 is provided with an inlet port 12 passing through the press-fitted spring retainer 57.

According to this embodiment, by adjusting the pressfitting position of the press-fitted spring retainer 57 relative to the valve housing 11, the spring load to be set of the valve-closing spring 20 can be adjusted, thereby making it possible to adjust the controlling characteristics of the control valve 10 for a variable capacity compressor.

By the way, the control valves 10 for a variable capacity compressor according to the second, third, fourth and fifth embodiment are constructed in the same manner as that of the first aforementioned embodiment except the aforementioned specific features, the same functions and effects as those of the first embodiment can be obtained.

As apparent from the above explanation, according to the control valve for a variable capacity compressor of the present invention, since the pressure sensitive bellows is housed in the pressure sensitive bellows housing inner cylinder which is formed in the plunger, it is possible to miniaturize the control valve.

Further, according to the control valve for a variable capacity compressor of the present invention, the initial state of the pressure sensitive bellows is made adjustable by means of the adjuster plug, and the set load of the valve-closing spring is made adjustable by means of the adjusting spring retainer or by means of the press-fitted spring retainer, so that the controlling characteristics of the control valve for a variable capacity compressor can be variously set through these adjustments.

Moreover, according to the control valve for a variable capacity compressor of the present invention, since the cylindrical solenoid assembly is removably mounted on the outer wall of the plunger tube and of the fixed suction member, the solenoid assembly can be reattached afterward to the valve housing, thereby making it possible to easily perform the attachment or exchange of the solenoid assembly, thus improving the workability of the control valve.

## Claims

1. A control valve (10) for a variable capacity compressor, which comprises a valve housing (11) having a valve port (15) formed between an inlet port (12) and an outlet port (13), a valve element disposed inside the valve housing (11) for controlling a flow rate by an adjustment of an opening degree of the valve port (15), a pressure sensitive bellows (30) for actuating the opening or closing of the valve element, and a solenoid magnetization means (26); wherein the solenoid magnetization means (26) comprises a solenoid assembly (43), a fixed suction member (24), a plunger (27) which is adapted to be moved in a way to contact the fixed suction member (24) by the magnetization of the solenoid assembly (43), and a plunger spring (42) which is adapted to urge the plunger (27) to move in a direction away from the fixed suction member (24); **characterized in that** the plunger (27) is provided therein with an inner cylindrical portion (28) housing therein the pressure sensitive bellows (30) and said plunger (27) is adapted to be connected at a distal end portion thereof with the valve element, the pressure sensitive bellows (30) being housed inside the inner cylindrical portion (28); and the pressure sensitive bellows (30) is adapted to be fixedly connected through one end member (33) thereof with the distal end portion of the plunger (27) and through anther end member (34) thereof with an end of the fixed suction member (24).

2. The control valve according to claim 1, which further comprises an adjuster plug (39) screwed to the fixed suction member (24), and said other end member (34) of the pressure sensitive bellows (30) is connected via a connecting rod (40) with the adjuster plug (39), thereby enabling to adjust the initial state of the pressure sensitive bellows (30) by means of the adjuster plug (39).

3. The control valve according to claim 1 or 2, wherein a valve-closing spring (20) for urging the valve element in the direction to close the valve element is interposed between the valve element and an adjusting spring retainer (56) screwed to the valve housing (11) thereby enabling to adjust the set load of the valve-closing spring (20) by means of the adjusting spring retainer (56).

4. The control valve according to claim 1 or 2, wherein a valve-closing spring (20) for urging the valve element in the direction to close the valve element is interposed between the valve element and a press-fitted spring retainer (57) press-fittingly fixed to the valve housing (11), the fixed position thereof being made adjustable, thereby enabling to adjust the set load of the valve-closing spring (20) by means of the press-fitted spring retainer (57).

5. The control valve according to any one of claims 1 to 4, wherein said valve element is constituted by a spool valve (16).

6. The control valve according to any one of claims 1 to 4, wherein said valve element is constituted by a ball valve (55).

7. The control valve according to any one of claims 1 to 6, which is featured in that it further comprises a plunger tube (23) fixedly attached to the solenoid-mounting portion of the valve housing (11) and housing therein the plunger (27) which is made slidable in the axial direction thereof, that the fixed suction member (24) is coaxially fixed to the distal end of the plunger tube (23), and that the cylindrical solenoid assembly (43) is removably mounted on the outer wall of the plunger tube (23) and of the fixed suction member (24).

## Patentansprüche

1. Regelventil (10) für einen Verstellkompressor, das ein Ventilgehäuse (11) mit einem zwischen einem Einlassanschluss (12) und einem Auslassanschluss (13) gebildeten Ventilanschluss (15), ein im Inneren des Ventilgehäuses (11) befindliches Ventilelement zur Reglung einer Durchflussrate durch eine Einstellung eines Öffnungsgrads des Ventilanschlusses (15), einen druckempfindlichen Faltenbalg (30) zur Betätigung des Öffnens oder Schließens des Ventilelements, und ein Magnetspulenmagnetisierungsmittel (26) umfassend eine Magnetspulenbaugruppe (43), ein fixiertes Saugbauteil (24), einen Kolben (27), der angepasst ist, durch die Magnetisierung der Magnetspulenbaugruppe (43) derart bewegt zu werden, um das fixierte Saugbauteil (24) zu kontaktieren, und eine Kolbenfeder (42), die angepasst ist, den Kolben (27) von dem fixierten Saugbauteil (24) weg zu treiben, umfasst, **dadurch gekennzeichnet, dass** der Kolben (27) mit einem inneren zylindrischen Teil (28) darin bereit gestellt wird, der darin den druckempfindlichen Faltenbalg (30) aufnimmt, und der Kolben (27) angepasst ist, an einem distalen Endteil desselben mit dem Ventilelement verbunden zu werden, wobei der druckempfindliche Faltenbalg (30) im Inneren des inneren zylindrischen Teil (28) aufgenommen ist, und dass der druckempfindliche Faltenbalg (30) angepasst ist, durch ein Endbauteil (33) desselben mit dem distalen Endteil des Kolbens (27) fest verbunden zu werden und durch ein anderes Endbauteil (34) desselben mit einem Ende des fixierten Saugbauteils (24) fest verbunden zu werden.

2. Regelventil nach Anspruch 1, das darüber hinaus ein Einstellzapfen (39), das an dem fixierten Saugbauteil (24) angeschraubt ist, umfasst, wobei das andere Endbauteil (34) des druckempfindlichen Faltenbalgs (30) durch eine Verbindungsstange (40) mit dem Einstellzapfen (39) verbunden ist, wodurch das Einstellen des Anfangszustands des druckempfindlichen Faltenbalgs (30) mit Hilfe des Einstellkükens (39) ermöglicht wird.

3. Regelventil nach Anspruch 1 oder 2, wobei eine ventilschließende Feder (20), mit der das Ventilelement in die Richtung zum Schließen des Ventilelements getrieben wird, zwischen dem Ventilelement und einem Einstellfeder-Haltelement (56), das am Ventilgehäuse (11) angeschraubt ist, zwischengeschaltet ist, wodurch das Einstellen der vorgegebenen Belastung der ventilschließenden Feder (20) mit Hilfe des Einstellfeder..Halteelementes (56) ermöglicht wird.

4. Regelventil nach Anspruch 1 oder 2, wobei eine ventilschließende Feder (20), mit der das Ventilelement in die Richtung zum Schließen des Ventilelements getrieben wird, zwischen dem Ventilelement und einem pressgepassten Feder-Haltelement (57), das durch Presspassung am Ventilgehäuse (11) fixiert ist, dessen fixierte Stellung einstellbar gemacht wird, zwischengeschaltet ist, wodurch das Einstellen der vorgegebenen Belastung der ventilschließenden Feder (20) mit Hilfe des pressgepassten Feder-Halteelementes (57) ermöglicht wird.

5. Regelventil nach einem der Ansprüche 1 bis 4, wobei das Ventilelement als Schieberventil (16) ausgebildet ist.

6. Regelventil nach einem der Ansprüche 1 bis 4, wobei das Ventilelement als Kugelventil (55) ausgebildet ist.

7. Regelventil nach einem der Ansprüche 1 bis 6, wobei das Ventil das Merkmal aufweist, dass es darüber hinaus ein Kolbenrohr (23) umfasst, das am Magnetspulenmontierteil des Ventilgehäuses (11) fixiert ist und das den Kolben (27), der in der axialen Richtung desselben verschiebbar ist, aufnimmt, dass das fixierte Saugbauteil (24) koaxial am distalen Ende des Kolbenrohrs (23) fixiert ist, und dass die zylindrische Magnetspulenbaugruppe (43) auf abnehmbare Weise an der Außenwand des Kolbenrohrs (23) und des fixierten Saugbauteils (24) montiert ist.

## Revendications

1. Soupape de commande (10) pour un compresseur à capacité variable, comprenant un boîtier de soupape (11) présentant un port de soupape (15) formé entre un port d'entrée (12) et un port de sortie (13), un élément de soupape disposé à l'intérieur du boîtier de soupape (11) pour commander un débit par un réglage d'un degré d'ouverture du port de soupape (15), un soufflet sensible à la pression (30) pour déclencher l'ouverture ou la fermeture de l'élément soupape et un moyen de magnétisation par solénoïde (26) ; sachant que le moyen de magnétisation par solénoïde (26) comprend un ensemble de solénoïde (43), un élément d'aspiration fixe (24), un piston (27) qui est adapté pour être déplacé de manière à contacter l'élément d'aspiration fixe (24) par la magnétisation de l'ensemble de solénoïde (43), et un ressort de piston (42) qui est adapté pour forcer le piston (27) à se déplacer dans une direction l'éloignant de l'élément d'aspiration fixe (2A) ; **caractérisée en ce que** le piston (27) est prévu à l'intérieur avec une partie cylindrique intérieure (28) logeant à l'intérieur le soufflet sensible à la pression (30) et ledit piston (27) est adapté pour être relié sur une partie d'extrémité distale de celui-ci avec l'élément de soupape, et le soufflet sensible à la pression (30) étant logé à l'intérieur de la partie cylindrique intérieure (28) ; et le soufflet sensible à la pression (30) est adapté pour être relié fixement par un élément d'extrémité (33) de celui-ci avec la partie d'extrémité distale du piston (27) et par un autre élément d'extrémité (34) de celui-ci avec une extrémité de l'élément d'aspiration fixe (24).

2. Soupape de commande selon la revendication 1, comprenant en outre un bouchon de réglage (39) vissé sur l'élément d'aspiration fixe (24), et ledit autre élément d'extrémité (34) du soufflet sensible à la pression (30) est relié au bouchon de réglage (39) via une tige de connexion (40), permettant ainsi de régler l'état initial du soufflet sensible à la pression (30) au moyen du bouchon de réglage (39).

3. Soupape de commande selon la revendication 1 ou 2, dans laquelle un ressort de fermeture de soupape (20) pour forcer l'élément de soupape dans la direction pour fermer l'élément de soupape est intercalé entre l'élément de soupape et une attache de ressort de réglage (56) vissée sur le boîtier de soupape (11) permettant ainsi de régler la charge donnée du ressort de fermeture de soupape (20) au moyen de l'attache de ressort de réglage (56).

4. Soupape de commande selon la revendication 1 ou 2, dans laquelle un ressort de fermeture de soupape (20) pour forcer l'élément de soupape dans la direction pour fermer l'élément de soupape est intercalé entre l'élément de soupape et une attache de ressort ajustée par serrage (57) fixée par ajustement par serrage au boîtier de soupape (11), dont la position fixe peut être rendue réglable, permettant ainsi de régler la charge donnée du ressort de fermeture de soupape (20) au moyen de l'attache de ressort ajustée par serrage (57).

5. Soupape de commande selon l'une quelconque des revendications 1 à 4, dans laquelle ledit élément de soupape est constituée par un distributeur de tiroir cylindrique (16).

6. Soupape de commande selon l'une quelconque des revendications 1 à 4, dans laquelle ledit élément de soupape est constituée par un clapet à bille (55).

7. Soupape de commande selon l'une quelconque des revendications 1 à 6, **caractérisée en ce qu'**elle comprend en outre un tube de piston (23) attaché fixement à la partie de montage de solénoïde du boîtier de soupape (11) et logeant à l'intérieur le piston (27) qui est rendu coulissable dans la direction axiale de celui-ci, **en ce que** l'élément d'aspiration fixe (24) est fixé de manière coaxiale à l'extrémité distale du tube de piston (23), et **en ce que** l'ensemble de solénoïde cylindrique (43) est monté de manière amovible sur la paroi extérieure du tube de piston (23) et de l'élément d'aspiration fixe (24).
